# EUROPEAN PATENT APPLICATION

(11) **EP 3 113 445 A1**
(43) Date of publication of application: **04.01.2017**
(21) Application number: 16174873.6
(22) Date of filing: 16.06.2016
(51) Int. Cl.: H04L 29/06, G06F 21/55, H04L 29/08

(54) **METHODS AND SYSTEMS FOR ADAPTIVE CYBER REASONING**

(30) Priority: 30.06.2015 US 201514788181
(71) Applicant: Honeywell International Inc., Morris Plains, NJ 07950 (US)
(72) Inventor: BHARADWAJ, Raj Mohan, Morris Plains, NJ New Jersey 07950 (US); VARADARAJAN, Srivatsan, Morris Plains, NJ New Jersey 07950 (US); BUSCH, Darryl, Morris Plains, NJ New Jersey 07950 (US); HUH, Jun Ho, Morris Plains, NJ New Jersey 07950 (US); JOHNSON, Daniel P., Morris Plains, NJ New Jersey 07950 (US)
(74) Representative: Houghton, Mark Phillip

(57) **Abstract**

Methods and systems are provided for monitoring cyber activity in a system having multiple networks. A method includes: receiving an evidence stream generated by a plurality of monitoring systems associated with a plurality of hardware and software components that communicate over the multiple networks; processing the evidence stream using at least one reference model to identify at least one cyber issue, where the cyber issue relates to at least one of security, safety, and resources; and generating at least one of actuator data and user interface data based on the identified cyber issue.

## Description

### TECHNICAL FIELD

The present disclosure generally relates to methods and systems for monitoring cyber safety and security, and more particularly relates to model-based methods and systems for monitoring cyber security and safety.

### BACKGROUND

An aircraft includes an aviation infrastructure that includes various hierarchically related sub-systems such as, propulsion systems, fight management systems, etc., that communicate over one or more networks. In some instances, the aviation infrastructure communication is off-board the aircraft such as to a remote system. The aircraft typically includes cabin systems for controlling features of the aircraft cabin. The cabin systems communicate over one or more networks. In some instances, the cabin systems communicate with the aviation infrastructure over a network. In some instances, the cabin system communication is off-board the aircraft such as to a remote system.

The aircraft may further include passenger systems that include a plurality of personal computing devices that communicate with other passenger systems or remote systems over a network. Conventional monitoring systems do not monitor cyber security and safety of a network in real-time. Conventional systems do not collectively monitor all of the various networks in a system in real-time.

Hence, there is a need for systems and methods for monitoring of the various cyber-activities of the various networks of a system, such as an aircraft. Other desirable features and characteristics will become apparent from the subsequent detailed description and the appended claims, taken in conjunction with the accompanying drawings and the foregoing technical field and background.

### BRIEF SUMMARY

Methods and systems are provided for monitoring cyber activity in a system having multiple networks. A method includes: receiving an evidence stream generated by a plurality of monitoring systems associated with a plurality of hardware and software components that communicate over the multiple networks; processing the evidence stream using at least one reference model to identify at least one cyber issue, where the cyber issue relates to at least one of security, safety, and resources; and generating at least one of actuator data and user interface data based on the identified cyber issue.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following figures, wherein like numerals denote like elements, and wherein:
FIG. 1 is a functional block diagram illustrating cyber monitoring system in accordance with exemplary embodiments;
FIG. 2 is a functional block diagram illustrating cyber monitoring system associated with an aircraft in accordance with exemplary embodiments;
FIG. 3 is a functional block diagram illustrating a member system of the cyber monitoring system in accordance with exemplary embodiments;
FIG. 4 is a functional block diagram illustrating cyber reasoner module of the cyber monitoring system in accordance with exemplary embodiments; and
FIG. 5 is a flowchart illustrating a cyber monitoring method that may be performed by the cyber monitoring system in accordance with exemplary embodiments.

### DETAILED DESCRIPTION

The following detailed description is merely exemplary in nature and is not intended to limit the disclosure or the application and uses of the disclosure. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

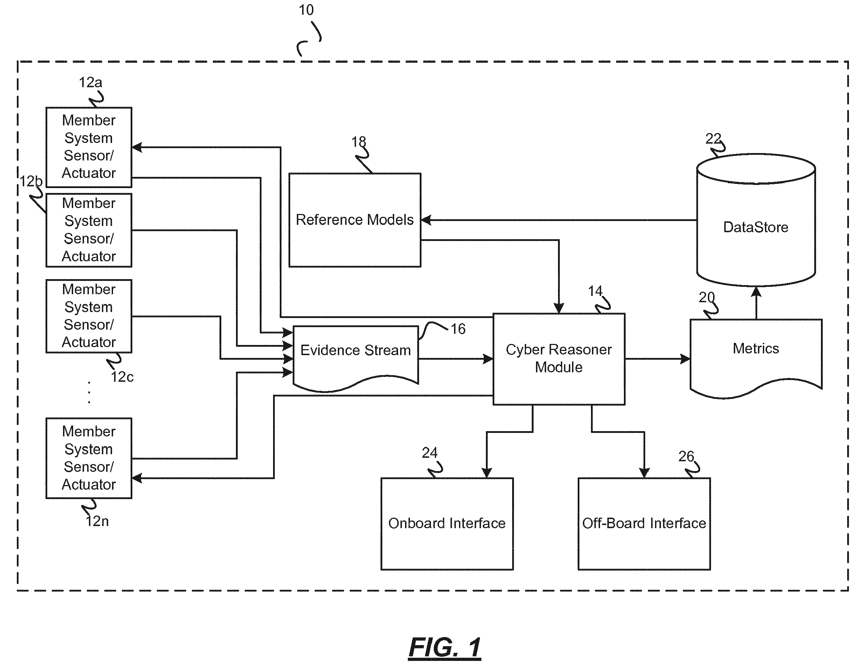

Referring now to FIG. 1, exemplary embodiments of the present disclosure are directed to a cyber monitoring system shown generally at 10 that may be implemented, for example, on an aircraft or other networked system. The cyber monitoring system 10 generally includes one or more member systems 12a-12n, and a cyber reasoner module 14. The member systems 12a-12n include sensors and/or actuators. For example, in various embodiments, some of the member systems 12a-12n include only sensors, some of the member systems 12a-12n include sensors and actuators, and/or some of the member systems 12a-12n include only actuators.

The sensors provide a stream of cyber evidence 16 to the cyber reasoner module 14. The evidence 16 indicates, for example, data identifying an event relating to breach in security, safety, and/or invalid access or usage of resources of the member systems 12a-12n. The actuators receive signals from the cyber reasoner module 14 (e.g., when a security or safety threat or breach has been identified). In response to the received signals, the actuators actuate a remedy of the associated member system 12a-12n, for example, to remedy the identified threat or breach.

In various embodiment, the cyber reasoner module 14 receives the evidence 16 and processes the evidence 16 based on one or more reference models 18. A reference model 18 includes, for example, a processing structure for collectively processing the security events, the safety events, and the resource events of the evidence stream. For example, the reference model 18 can be an integrated structure (e.g., a graph or tree structure) that includes nested conditions for evaluating the security events, the safety events, and the resource events. In various embodiments, the reference models 18 can include, but are not limited to, fault trees that are based on system safety assessment and FMEA (Failure mode and Effects Analysis) for identifying low level faults that translate to high level aircraft hazards; threat trees that are based on system security assessment for identifying all possible source of threats, their origination, their impact, the security controls that are available for their protection and their corresponding efficacy; network architecture and topology trees identifying all hardware and software components in the system; resource models that identify network resources (i.e., bandwidth, latency, loss), processing resources (i.e., memory, CPU clock cycles etc.), and their access patterns and usages; functional behavior models of nominal (fault-free) behavior of the application which will be used to detect abnormal/anomalous behavior; and models of response action on specific faults/threats based on contingency planning and pre-packaged responses. In various embodiments, a reference model 18 can be provided for a particular mode of operation of the system, thus a system having multiple modes includes multiple reference models 18.

The cyber reasoner module 14 receives the evidence 16 from various member systems 12a-12n and then correlates the evidence 16 with the reference models to provide a system-wide real-time or offline assessment of the system (e.g, aircraft or other networked system) and then to take remedial action (if any) via the actuators. For example, the cyber reasoner module 14 processes the evidence 16 to determine any issues and whether a warning or notification should be generated, and/or whether an action should be taken based on the issue.

In various embodiments, the cyber reasoner module 14 provides metrics 20 based on the processing of the evidence 16. The metrics 20 may be stored temporarily or long-term in a datastore 22, and may be used to update the one or more reference models 18 online (e.g., in realtime while the system is in operation) or offline (e.g., while the system is not operation).

The cyber reasoner module 14 generates one or more interactive user interfaces 24-26 to display the performance metrics, the warnings, and/or indications of the actuator actions. For example, an onboard user interface 24 is displayed onboard the system and an off-board user interface 26 is displayed off-board the system. In some instances, the content is selectively displayed on either the onboard user interface 24 or the off-board user interface 26 or both the onboard user interface 24 and the off-board user interface 26 based on a workload of the viewer, a threat type, a security breach type, and/or other factors. The content is selectively displayed such that the cyber security and safety can be monitored and threats or breaches be addressed in an efficient manner.

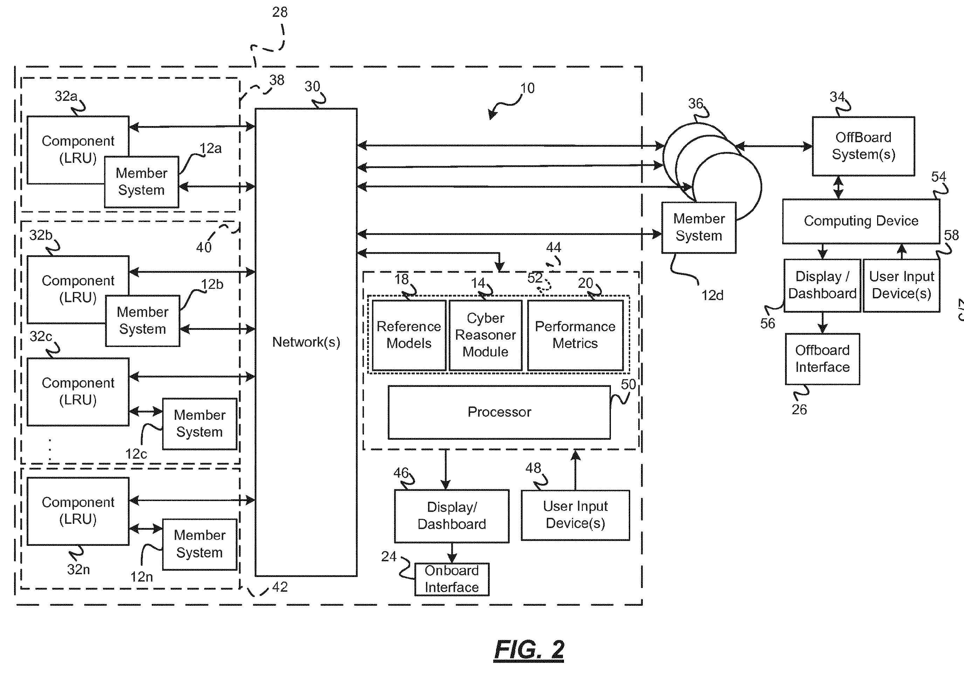

With reference now to FIG. 2, the cyber monitoring system 10 and its association with an aircraft 28 is shown in more detail. As can be appreciated, the cyber monitoring system 10 described herein can be implemented in any aircraft 28 or any other system and is not limited to any one example. As shown, the aircraft 28 includes a network 30 (or a plurality of combined networks) that supports communication between one or more components 32a-32n of the aircraft 28 and that supports communication to one or more off-board systems 34 through, for example, one or more off-board communication devices 36 (e.g., gateways, routers, etc.). The components 32a-32n may be, for example, line replaceable units (LRU) or other modular components of the aircraft 28 that transmit and/or receive data over the network(s) 30. The components 32a-32n may be associated with a flight control domain 38 which is private aircraft domain, a cabin domain 40 which is a private cabin related domain, or a passenger domain 42 which is a public passenger related domain.

As shown, the member systems 12a-12n of the cyber security monitoring system 10 are associated with one or more of the components 32a-32n. For example, some member systems 12a-12n may be implemented as a part of the component 32a-32n (e.g., member systems 12a, 12b); and some member systems 12a-12n may be implemented separate from but in communication with the component 32a-32n (e.g., member systems 12c, 12n). The member systems 12a-12n of the cyber monitoring system 10 are further associated with the off-board communication devices. In another example, some of the member systems 12a-12n may be implemented as a part of the off-board communication devices 36 (e.g., member system 12d) and/or may be implemented separate from but in communication with the off-board communication device 36.

As can be appreciated, each component 32a-32n and each off-board communication device 36 may communicate data over any number of communication mediums such as, but not limited to, Wi-Fi (e.g., Wi-Fi, WiMax 802.11/802.16, etc.), cellular (e.g., 3G, 4G, etc.), satellite communication, aeronautical datalink communication (e.g., VHF, ADSB, ACARS, TCAS, etc.), and high-integrity communication (e.g., AFDX, TTE, Safebus, ASCB, etc.) In various embodiments, the sensors of the member systems 12a-12n monitor data for each of the communication mediums.

The network 30 is further associated with at least one computing device 44 of the aircraft 28. The computing device 44 is associated with a display device 46 and one or more user input devices 48. The display device 46 may be located in a cockpit of the aircraft 28 for viewing by, for example, a pilot of the aircraft 28. In various embodiments, the display device 46 is an interactive display device (e.g., a touch screen, or other interactive display device) that accepts user input from a user through the one or more of the user input devices 48.

The computing device 44 includes at least a processor 50, and one or more data storage devices 52. The processor 50 can be any custom made or commercially available processor, a central processing unit (CPU), an auxiliary processor among several processors associated with the computing device 44, a semiconductor based microprocessor (in the form of a microchip or chip set), a macroprocessor, or generally any device for executing instructions. The data storage device 52 may be one or a combination of storage elements that store data, and/or instructions that can be performed by the processor 50. The instructions may include one or more separate programs, each of which comprises an ordered listing of executable instructions for implementing logical functions.

In various embodiments, the cyber reasoner module 14, the reference models 18, and/or the metrics 20 are stored in the data storage device 52. In such embodiments, the cyber reasoner module 14 includes one or more instructions that may be executed by the processor 50 of the computing device 44. In general, the instructions of the cyber reasoner module 14 receive the evidence stream 16 (FIG. 1) from the member systems 12a-12n through the network 30, process the data of the evidence stream 16 (FIG. 1) based on the one or more defined reference models 18, generate one or more actuation instructions to actuate a remedy based on the processing, and manage the one or more interactive user interfaces 24, 26 based on the processing.

In various embodiments, the cyber reasoner module 14 communicates data for the off-board user interface 26 to the one or more off-board systems 34 via the network 30 and the off-board communication devices 36. At least one of the off-board systems 34 includes a computing device 54 that is associated with a display device 56 and one or more user input devices 58.

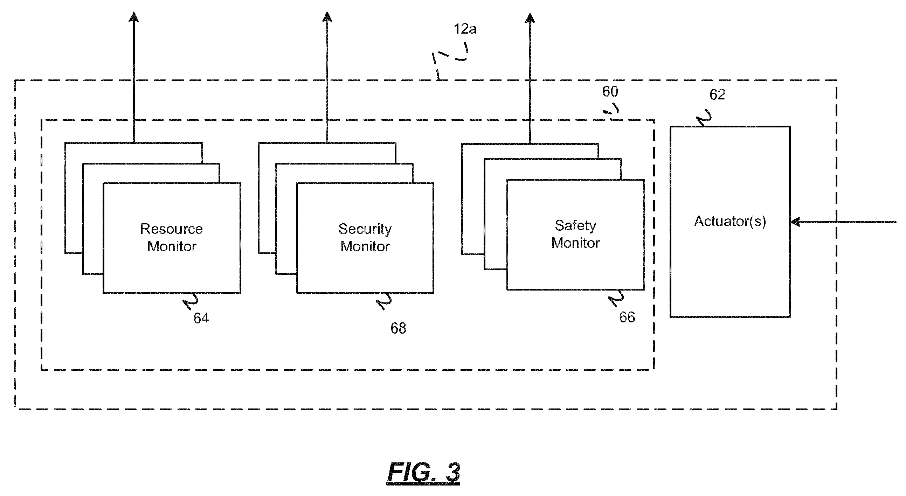

Referring now to FIG. 3, a member system 12a is shown in more detail in accordance with various embodiments. As discussed above, the member systems 12a-12n include one or more sensors 60 and/or one or more actuators 62. Each sensor 60 monitors data associated with one or more communication mediums. In general, each sensor 60 includes one or more resource monitors 64, one or more safety monitors 66, and/or one or more security monitor 68. In various embodiments, a safety monitor 66 monitors a safety feature of the component (e.g., activities or faults relating to the component itself). Such safety features can include, but are not limited to, a source integrity of communicated data, data integrity of communicated data, scheduler and operating system time partitions, memory partitions, and data availability. A security monitor 68 monitors a security feature associated with the component (e.g., activities or faults originating from outside the component such as from a third party). For example, a security monitor 68 monitors integrity of assets or data to prevent corruption of data (identity & content) and assets (e.g., that the data at receiver is the same as source verifiably and the asset is correct functionally); availability of assets or data; source authenticity of any action on any asset or data; authorization of each entity accessing any asset or data; confidentiality of sensitive assets or data; correct and early detection of misuse of assets or data; traceability of actions on assets or data; and association with at least one authorized entity.

In various embodiments, a resource monitor 64 monitors resources of the component such as, but not limited to, processor usage, communication usage (bandwidth), communication timeliness, communication drops, and memory usage. The resultant data from the monitors 64-68 is streamed through the network 30 (FIG. 2) to the cyber reasoner module 14 (FIG. 2).

In general, the actuators 62 perform one or more remedies upon receipt of data from the cyber reasoner module 14. In various embodiments, one or more of the actuators 62 may each perform a single remedy. In various embodiments, one or more of the actuators 62 may each perform multiple remedies. In various embodiments, multiple actuators 62 together may perform a single remedy.

The remedies are performed to prevent or counter a security or safety breach. If a security or safety breach has occurred, the remedies are performed to correct anomalies introduced as a result of the breach and/or to prevent similar breaches from occurring in the future. The remedies can include a variety of actions that are performed by the component 32a-32n. In various embodiments, the remedies can include, but are not limited to, enabling digital signatures, enabling digital certificates, enabling public key encryption/symmetric key encryption methods, enabling hardware and software redundancy mechanisms, enabling integrity check mechanisms (e.g. High-Integrity/Com-Mon, CRC, etc.), and enabling integrity policies (e.g. Bell and La Padula security policy, or other policy). In various embodiments, the remedies can include, but are not limited to, enabling tamper-proof logs, enabling cross-domain communication security using sufficient physical (e.g. air-gap), activating logical or organizational inhibitors (e.g. network firewalls, routers, switches, etc.), editing read/write privileges, changing access control and security policies, enabling controlled power-up (start-up) and power-down and reset policies, enabling minimal "safe" mode or provisions for degraded mode of operations, back-up modes, etc., and enabling time-space partitions. In various embodiments, the remedies can include, but are not limited to, enabling noninterference, enabling separability, performing maintenance of logs, requiring password protection, performing secure key management, limiting to only preloaded software and configuration, permitting data loading only in certain (i)modes (ii) certain time and (iii) physical access, performing configuration compatibility checks, performing mandated process checks for certifying software or hardware, and controlling access to select personnel (aircraft operators assumed to operate correctly, reliable managing software, configuration). As can be appreciated, other remedies can be implemented in various embodiments, depending on the threat type and the domain in which the threat exists.

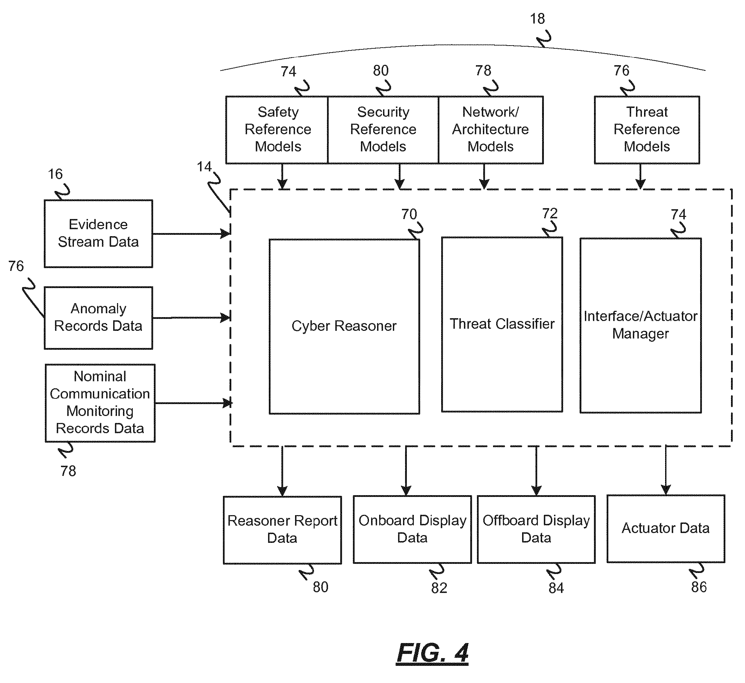

Referring now to FIG. 4, a dataflow diagram illustrates the cyber reasoner module 14 in more detail in accordance with various embodiments. As shown, the cyber reasoner module 14 includes a reasoner 70, a threat classifier 72, and an interface manager 74. The reasoner 70 receives the streamed data 16 along with any stored anomaly records 76 from the datastore 22 (FIG. 1), and/or nominal communicating or monitoring records 78, and performs both diagnostic analysis (i.e., a best explanation of what is happening now), and prognostic analysis (i.e., best explanation of what will happen in the future) on the received data 16, 76, 78 using the reference models 18. The security reasoner 70 generates performance data 80 based on the analysis. The cyber reasoner module 14 stores any identified anomalies based on the analysis. In various embodiments, the diagnostic analysis provides a Boolean indication such as, but not limited to, on/off, pass/fail, okay/not-okay, etc.; and the prognostic analysis provides condition indicators such as a parametric value along with an acceptable region and a probability vector in future time.

The threat classifier 72 receives results of the analysis along with one or more reference models 18, and identifies and classifies any threats. The threats can be classified as, for example, but not limited to, loss of control, denial of service, asset unavailability, asset corruption, false alarm, late detection, asset sensitivity, repudiation, counterfeit software, configuration, and malware on identified device. The interface and actuator manager 74 receives the identified threats and generates on-board interface data 82, and/or off-board interface data 84 that includes notifications of the threat and any identified remedies. The interface and actuator manager 74 additionally or alternatively generates actuator data 86 for actuating one or more of the remedies based on the identified threat.

In various embodiments, the reference models 18 used by the cyber reasoner module 14 include an integrated model of one or more safety reference models 88, network/architecture reference models 92, and security reference models 94. In various embodiments, the reference models 18 can be provided for various modes of operation, such as, but not limited to, modes of operation of the aircraft 28 (FIG. 2) (e.g., ground mode, operation mode, maintenance mode, etc.).

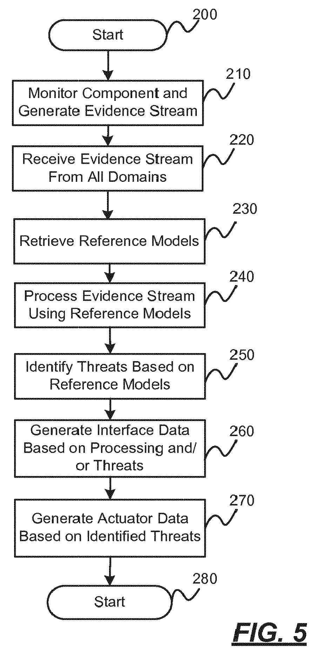

Referring now to FIG. 5, and with continued reference to FIGS. 1 through 4, a flowchart illustrates a method that can be performed by the cyber reasoner module 14 in accordance with the present disclosure. As can be appreciated in light of the disclosure, the order of operation within the method is not limited to the sequential execution as illustrated in FIG. 5, but may be performed in one or more varying orders as applicable and in accordance with the present disclosure.

In various embodiments, the method can be scheduled to run based on predetermined events or may be scheduled to run at predetermined time intervals. In one example, the method may begin at 200. The member systems 12a-12n monitor activity of the modular components 32a-32n and generate the evidence stream 16 at 210. The evidence stream 16 for all domains 38-42 is received by the cyber reasoner module 14 at 220. The appropriate reference models 18 (e.g., based on the current mode of operation) are retrieved at 230. The cyber reasoner module 14 processes the evidence stream 16 based on the reference models 18 at 240. Any threats are identified based on the reference models 18 at 250. Interface data 82, 84 for the onboard user interface 24 and/or the off-board user interface 26 is generated based on the processing and/or any identified threats at 260. Actuator data 86 is generated based on the identified threats at 270. Thereafter, the method may end at 280.

Those of skill in the art will appreciate that the various illustrative logical blocks, modules, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first", "second", "third", etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of monitoring cyber activity of a system having multiple networks, comprising:
receiving an evidence stream generated by a plurality of monitoring systems associated with a plurality of hardware and software components that communicate over the multiple networks;
processing the evidence stream using at least one reference model to identify at least one cyber issue, where the cyber issue relates to at least one of security, safety, and resources; and
generating at least one of actuator data and user interface data based on the identified cyber issue.

2. The method of claim 1, wherein the plurality of components include avionic modular components.

3. The method of claim 1, wherein the system is an aircraft and wherein the multiple networks are associated with at least one of a flight control domain, a cabin domain, and a passenger domain.

4. The method of claim 3, wherein the plurality of components are a part of the flight control domain, the cabin domain, and the passenger domain.

5. The method of claim 1, wherein at least one of the plurality of components is an off-board communication device.

6. The method of claim 1, further comprising:
monitoring resources of the plurality of components; and
generating the evidence stream based on the monitoring.

7. The method of claim 1, further comprising:
monitoring safety features of the plurality of components; and
generating the evidence stream based on the monitoring.

8. The method of claim 1, further comprising:
monitoring security features of the plurality of components; and
generating the evidence stream based on the monitoring

9. The method of claim 1, wherein the reference model includes an integrated model that evaluates safety features, security features, and resource features.

10. A system for cyber monitoring of a system having multiple networks, comprising:
a plurality of monitoring systems that generate an evidence stream based on a monitoring a plurality of components of the multiple networks; and
a computer module that receives the evidence stream, that processes the evidence stream using at least one reference model to identify at least one cyber issue , where the cyber issue relates to at least one of security, safety, and resources, and that generates at least one of actuator data and user interface data based on the identified issue.
